# EUROPEAN PATENT APPLICATION

(11) **EP 4 145 906 A1**
(43) Date of publication of application: **08.03.2023**
(21) Application number: 21795508.7
(22) Date of filing: 26.03.2021
(51) Int. Cl.: H04W 40/22, H04W 76/11

(54) **NON-IP TYPE DATA TRANSMISSION PROCESSING METHOD, DEVICE AND APPARATUS, AND MEDIUM**

(30) Priority: 28.04.2020 CN 202010350672
(71) Applicant: Datang Mobile Communications Equipment Co., Ltd., Beijing 100085 (CN)
(72) Inventor: DENG, Qiang, Beijing 100083 (CN)
(74) Representative: Maiwald GmbH
(86) International application number: PCT/CN2021/083213
(87) International publication number: WO 2021/218512

(57) **Abstract**

The present disclosure provides a non-IP type data transmission processing method, a device, an apparatus and a medium. The method includes: sending, by a relay user equipment, a protocol data unit session request message to a session management function to establish a QoS flow on a Uu interface that supports non-IP type data transmission; receiving, by the relay user equipment, a protocol data unit session response message sent by the session management function, the response message including a flow identifier of the QoS flow; returning, by the session management function, the QoS flow identifier to the relay user equipment; performing, by the relay user equipment, data forwarding according to the flow identifier.

## Description

### CROSS-REFERENCE TO RELATED APPLICATION

The present application claims a priority to the Chinese patent application No. 202010350672.0 filed in China on April 28, 2020, a disclosure of which is incorporated herein by reference in its entirety.

### TECHNICAL FIELD

The present disclosure relates to the field of wireless communication technology, in particular to a non-IP type data transmission processing method, a device an apparatus, and a medium.

### BACKGROUND

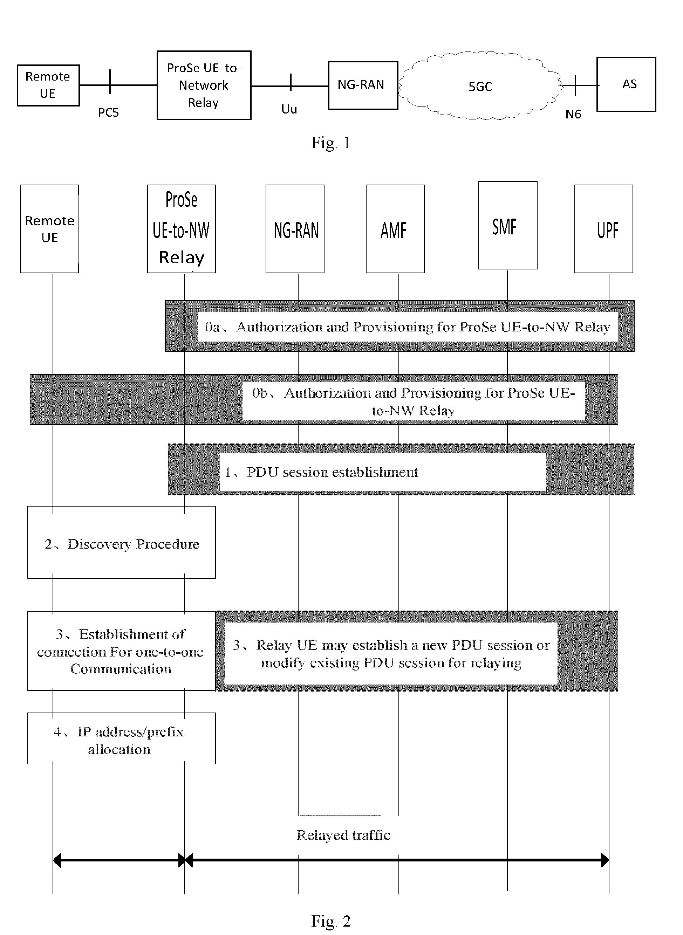

For proximity service (ProSe), when user equipment (UE) is outside the network coverage or Uu interface signal is poor, the UE cannot directly connect to the network, and can connect to the network through a UE with a relay function. The former UE is called remote UE and the latter one is called relay UE. Fig. 1 is a schematic diagram of the ProSe UE-to-Network relay architecture, and the network architecture is as shown in Fig. 1.

As for how the remote UE communicates with the network through the relay LTE, a solution is as follows.

Fig. 2 is a schematic diagram of a ProSe UE-to-Network relay communication process, mainly including the following steps.
0a. Authorization and Provisioning for ProSe UE-to-NW relay.
0b. Authorization and Provisioning for ProSe UE-to-NW relay.

The network provides the remote UE and the relay UE with parameters required for ProSe communication (PC5 interface communication), such as the relay service code used to select the relay UE.

### 1. PDU session establishment (PDU: Protocol Data Unit).

The relay UE establishes a relay PDU session over the Uu interface, and the PDU session is used for relaying data of the remote UE. The relay UE obtains an IPv6 prefix from the network through an IPv6 prefix proxy function.

### 2. Discovery Procedure.

The remote UE performs a discovery procedure to discover the relay UE.

### 3. Establishment of connection for one-to-one Communication.

The relay UE may establish a new PDU session or modify existing PDU session for relaying.

The remote UE selects a relay UE and establishes one-to-one direct communication. The communication interface between the remote UE and the relay UE is the PC5 interface. If a new PDU session needs to be established, the relay UE initiates a new PDU session establishment process.

### 4. IP address/prefix allocation.

The relay UE allocates an IP address to the remote UE.

The remote LTE communicates with the network through the PDU session established by the relay UE. For uplink data, the relay UE maps IP packets received from the remote UE to a corresponding PDU session through a packet filter; for the downlink data, the relay LTE maps the IP packets received from the PDU session to a corresponding PC5 unicast link in accordance with the Remote UE IP address.

Start relayed traffic.

In order to support various types of applications (including vertical industry applications), the communication system needs to support the data transmission of three PDU session types: IP, Ethernet and unstructured. When the remote LTE communicates with the network through the relay LTE, it also needs to support these three types of data transmission.

The disadvantage of the related art is that there is no solution for supporting Ethernet and unstructured PDU sessions in the related art.

### SUMMARY

The present disclosure provides a non-IP type data transmission processing method, a device, an apparatus, and a medium, to solve the problem in the related art that the non-IP type data transmission between the remote UE and the network through the relay UE in the proximity service is not supported.

An embodiment of the present disclosure provides a non-IP type data transmission processing method, including:
sending, by a relay LTE, a PDU session request message to a session management function (SMF) to establish a QoS flow on a Uu interface that supports non-IP type data transmission;
receiving, by the relay UE, a PDU session response message sent by the SMF, the response message including a flow identifier of the QoS flow;
performing, by the relay LTE, data forwarding according to the flow identifier.

Optionally, the non-IP type data is unstructured type data or Ethernet type data.

Optionally, the sending, by the relay UE, the PDU session request message to the session management function to establish the QoS flow on the Uu interface that supports non-IP type data transmission includes:
carrying, by the relay LTE, a PDU session identifier and relay indication information in the PDU session request message, the relay indication information being used for indicating to the SMF that the PDU session is established by the relay UE for relaying data of a remote LTE; or,
carrying, by the relay LTE, the PDU session identifier and QoS information in the PDU session request message, the QoS information being used for indicating to the SMF that a new QoS flow is to be established.

Optionally, the method further includes:
exchanging, by the relay UE and the remote UE, a relay service code and a corresponding PDU session type during a relay discovery procedure.

Optionally, the method includes:
incorporating, by the relay UE, the relay service code and the corresponding PDU session type in a relay discovery broadcast message, or,
receiving, by the relay UE, a relay discovery request message sent by the remote UE, the relay discovery request message including the relay service code and the corresponding PDU session type.

Optionally, the method further includes:
receiving, by the relay UE, a connection establishment request message sent by the remote UE, the connection establishment request message including a PC5 link identifier and a PC5 flow identifier on a PC5 interface.

Optionally, the performing, by the relay LTE, data forwarding according to the flow identifier includes:
determining, by the relay UE, a mapping of a PC5 link identifier and a PC5 flow identifier to a PDU session identifier and a QoS flow identifier;
performing, by the relay UE, data forwarding according to the mapping.

Optionally, when the non-IP type data is unstructured type data, the PC5 link identifier and the PC5 flow identifier correspond to the PDU session identifier and the QoS flow identifier in a one-to-one manner.

Optionally, the performing, by the relay LTE, the data forwarding according to the mapping includes:
for uplink data, sending, by the relay LTE, data received from a QoS flow of the PC5 interface to a corresponding QoS flow of the Uu interface according to the mapping; and/or,
for downlink data, sending, by the relay LTE, data received from a QoS flow of the Uu interface to a corresponding QoS flow of the PC5 interface according to the mapping.

Optionally, the method further includes:
receiving, by the relay LTE, a relay service code and a corresponding PDU session type provided by a policy control function (PCF).

An embodiment of the present disclosure provides a non-IP type data transmission processing method, including:
receiving, by an SMF, a PDU session request message sent by the relay UE to establish a QoS flow on a Uu interface that supports non-IP type data transmission;
returning, by the SMF, a QoS flow identifier to a relay UE.

Optionally, the receiving, by the SMF, the PDU session request message sent by the relay LTE to establish the QoS flow on the Uu interface that supports non-IP type data transmission includes:
carrying, by the relay LTE, a PDU session identifier and relay indication information in the PDU session request message, the relay indication information being used for indicating to the SMF that the PDU session is established by the relay UE for relaying data of a remote LTE; or,
carrying, by the relay LTE, the PDU session identifier and QoS information in the PDU session request message, the QoS information being used for indicating to the SMF that a new QoS flow is to be established.

Optionally, the method further includes:
allocating, by the SMF, an IPv6 prefix and a user datagram protocol (UDP) port for the QoS flow;
sending, by the SMF, an association between the QoS flow identifier and the associated IPv6 prefix and UDP port to a UPF.

Optionally, the method further includes:
receiving, by the SMF, a PDU session identifier and an indication that a new QoS flow is to be established sent by the relay LTE in a PDU session modification procedure;
returning, by the SMF, a QoS flow identifier to the relay UE.

Optionally, the SMF returns the QoS flow identifier to the relay UE through a session modification response message.

An embodiment of the present disclosure provides a relay UE, including a processor, a transceiver and a memory storing therein a program,
wherein the processor is configured to read the program in the memory to implement the following process:
sending a PDU session request message to an SMF to establish a QoS flow on a Uu interface that supports non-IP type data transmission;
receiving a PDU session response message sent by the SMF, the response message including a flow identifier of the QoS flow;
performing data forwarding according to the flow identifier; and
the transceiver is configured to receive and transmit data under the control of the processor.

Optionally, the non-IP type data is unstructured type data or Ethernet type data.

Optionally, the sending the PDU session request message to the session management function to establish the QoS flow on a Uu interface that supports non-IP type data transmission includes:
carrying a PDU session identifier and relay indication information in the PDU session request message, the relay indication information being used for indicating to the SMF that the PDU session is established by the relay UE for relaying data of a remote LTE; or,
carrying the PDU session identifier and QoS information in the PDU session request message, the QoS information being used for indicating to the SMF that a new QoS flow is to be established.

Optionally, the UE further includes:
exchanging, with the remote UE, a relay service code and a corresponding PDU session type during a relay discovery procedure.

Optionally, the UE includes:
incorporating the relay service code and the corresponding PDU session type in a relay discovery broadcast message, or,
receiving a relay discovery request message sent by the remote UE, the relay discovery request message including the relay service code and the corresponding PDU session type.

Optionally, the UE further includes:
receiving a connection establishment request message sent by the remote UE, the connection establishment request message including a PC5 link identifier and a PC5 flow identifier on a PC5 interface.

Optionally, the performing data forwarding according to the flow identifier includes:
determining a mapping of the PC5 link identifier and the PC5 flow identifier to the PDU session identifier and the QoS flow identifier;
performing data forwarding according to the mapping.

Optionally, when the non-IP type data is unstructured type data, the PC5 link identifier and the PC5 flow identifier correspond to the PDU session identifier and the QoS flow identifier in a one-to-one manner.

Optionally, the performing the data forwarding according to the mapping includes:
for uplink data, sending data received from a QoS flow of the PC5 interface to a corresponding QoS flow of the Uu interface according to the mapping; and/or,
for downlink data, sending data received from a QoS flow of the Uu interface to a corresponding QoS flow of the PC5 interface according to the mapping.

Optionally, the UE further includes:
receiving a relay service code and a corresponding PDU session type provided by a PCF.

An embodiment of the present disclosure provides an SMF, including a processor, a transceiver and a memory storing therein a program,
wherein the processor is configured to read the program in the memory to implement the following process:
receiving a PDU session request message sent by the relay LTE to establish a QoS flow on a Uu interface that supports non-IP type data transmission;
returning a QoS flow identifier to a relay UE; and
the transceiver is configured to receive and transmit data under the control of the processor.

Optionally, the receiving a PDU session request message sent by the relay UE to establish a QoS flow on a Uu interface that supports non-IP type data transmission includes:
carrying, by the relay LTE, a PDU session identifier and relay indication information in the PDU session request message, the relay indication information being used for indicating to the SMF that the PDU session is established by the relay UE for relaying data of a remote LTE; or,
carrying, by the relay LTE, the PDU session identifier and QoS information in the PDU session request message, the QoS information being used for indicating to the SMF that a new QoS flow is to be established.

Optionally, the SMF further includes:
allocating, by the SMF, an IPv6 prefix and a user datagram protocol (UDP) port for the QoS flow;
sending, by the SMF, an association between the QoS flow identifier and the associated IPv6 prefix and UDP port to a UPF.

Optionally, the SMF further includes:
receiving a PDU session identifier and an indication that a new QoS flow is to be established sent by the relay UE in a PDU session modification procedure;
returning a QoS flow identifier to the relay UE.

Optionally, the SMF returns the QoS flow identifier to the relay UE through a session modification response message.

An embodiment of the present disclosure provides a non-IP type data transmission processing apparatus, including:
a relay UE sending module, configured to send a PDU session request message to the session management function (SMF) to establish a QoS flow on a Uu interface that supports non-IP type data transmission;
a relay LTE receiving module, configured to receive a PDU session response message sent by the SMF, the response message including a flow identifier of the QoS flow;
a relay LTE forwarding module, configured to perform data forwarding according to the flow identifier.

An embodiment of the present disclosure provides a non-IP type data transmission processing apparatus, including:
an SMF receiving module, configured to receive a PDU session request message sent by the relay LTE to establish a QoS flow on a Uu interface that supports non-IP type data transmission;
an SMF sending module, configured to return a QoS flow identifier to a relay UE.

An embodiment of the present disclosure provides a computer-readable storage medium storing a computer program, wherein the computer program is configured to be executed by a computer, to implement the non-IP type data transmission processing method mentioned above.

The beneficial effects of the present disclosure are as follows.

In the technical solution provided by the embodiments of the present disclosure, the relay UE sends a PDU session request message to the SMF to establish a QoS flow on a Uu interface that supports non-IP type data transmission, and receives a flow identifier of the QoS flow established by the SMF for the non-IP data type PDU session, then the relay UE can perform data forwarding according to the flow identifier of the QoS flow;
the SMF will send the association between the QFI and the associated IPv6 prefix and UDP port to the UPF, so that the UPF can forward data according to the association.

Therefore, this solution solves the problem that remote UE supports Ethernet and unstructured (that is, non-IP type) data transmission through relay UE, and provides a solution to support the transmission of non-IP type data between a remote UE and the network through a relay UE in proximity services.

### BRIEF DESCRIPTION OF THE DRAWINGS

The accompanying drawings described herein are used to provide further understanding of the present disclosure and constitute a part of the present disclosure. The exemplary embodiments of the present disclosure and their descriptions are used to explain the present disclosure and do not constitute an improper limitation of the present disclosure. The accompanying drawings are listed as below.
Fig. 1 is a schematic diagram of a ProSe UE-to-Network Relay architecture according to the background section;
Fig. 2 is a schematic diagram of a ProSe UE-to-Network Relay communication process according to the background section;
Fig. 3 is a schematic implementation flowchart of a non-IP type data transmission processing method on a relay UE according to an embodiment of the present disclosure;
Fig. 4 is a schematic implementation flowchart of a non-IP type data transmission processing method on an SMF according to an embodiment of the present disclosure;
Fig. 5 is a schematic implementation flowchart of a non-IP type data transmission processing method on a UPF according to an embodiment of the present disclosure;
Fig. 6 is a schematic diagram of an Unstructured type data transmission path in a relay scenario in an embodiment of the present disclosure;
Fig. 7 is a schematic diagram of an unstructured type data transmission process according to Embodiment 1 of the present disclosure;
Fig. 8 is a schematic diagram of an Ethernet type data transmission path in a relay scenario according to an embodiment of the present disclosure;
Fig. 9 is a schematic diagram of an Ethernet type data transmission process according to Embodiment 2 of the present disclosure;
Fig. 10 is a schematic structural diagram of a relay LTE according to an embodiment of the present disclosure;
Fig. 11 is a schematic structural diagram of an SMF according to an embodiment of the disclosure.

### DETAILED DESCRIPTION

5G ProSe project of 3GPP conducts research and standardization on Proximity Service (ProSe). An important scenario in ProSe is that the remote UE communicates with the network through the relay UE.

The 5G system supports three PDU session types: IP, Ethernet and Unstructured. 5G ProSe project also shows how relay UE and remote LTE support IP type PDU sessions, but how to support Ethernet and unstructured type PDU sessions is an unsolved problem in the standard.

Based on this, the embodiments of the present disclosure provide a non-IP type data transmission processing solution, so as to support the transmission of non-IP type data between the remote UE and the network through the relay UE in the proximity service.

The specific implementation of the present disclosure will be described below with reference to the accompanying drawings.

In the description process, the implementations in remote UE and relay UE, SMF, and UPF will be described respectively, and then an example of their coordinated implementation will be given to better understand the implementation of the solutions given in the embodiments of the present disclosure. This description does not mean that the two must be implemented together or must be implemented separately. In fact, when remote UE and relay UE, SMF, and UPF are implemented separately, they also solve their own problems, and when they are used together, will get better technical effect.

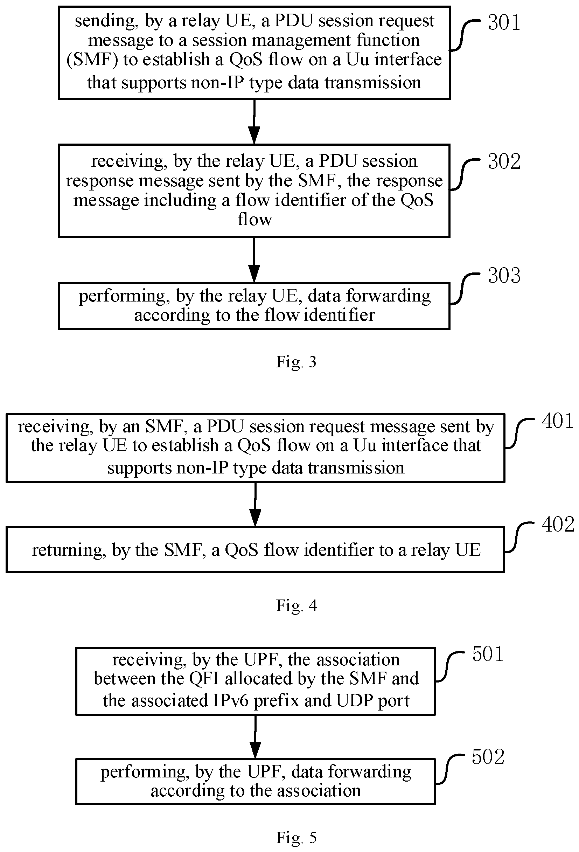

Fig. 3 is a schematic implementation flowchart of a non-IP type data transmission processing method on a relay UE. As shown in the figure, it includes:
step 301, sending, by a relay LTE, a PDU session request message to a session management function (SMF) to establish a QoS flow on a Uu interface that supports non-IP type data transmission;
step 302, receiving, by the relay UE, a PDU session response message sent by the SMF, the response message including a flow identifier of the QoS flow;
step 303, performing, by the relay UE, data forwarding according to the flow identifier.

Fig. 4 is a schematic implementation flowchart of a non-IP type data transmission processing method on an SMF. As shown in the figure, it includes:
step 401, receiving, by an SMF, a PDU session request message sent by the relay UE to establish a QoS flow on a Uu interface that supports non-IP type data transmission;
step 402, returning, by the SMF, a QoS flow identifier to a relay UE.

Specifically, the SMF can allocate an QoS flow identifier and associated IPv6 prefix and user datagram protocol (UDP) port;
the SMF returns the QoS flow identifier to the relay UE, and the SMF may also send the association between the QoS flow identifier and the associated IPv6 prefix and UDP port to the UPF.

Fig. 5 is a schematic implementation flowchart of a non-IP type data transmission processing method on an UPF. As shown in the figure, the method includes:
step 501, receiving, by the UPF, the association between the QFI allocated by the SMF and the associated IPv6 prefix and UDP port;
step 502, performing, by the UPF, data forwarding according to the association.

### 1. The interaction between the relay UE and the SMF.

1) The sending, by the relay UE, the PDU session request message to the session management function to establish the QoS flow on a Uu interface that supports non-IP type data transmission includes:
carrying, by the relay LTE, a PDU session identifier and relay indication information in the PDU session request message, the relay indication information being used for indicating to the SMF that the PDU session is established by the relay UE for relaying data of a remote LTE; or,
carrying, by the relay LTE, the PDU session identifier and QoS information in the PDU session request message, the QoS information being used for indicating to the SMF that a new QoS flow is to be established.

Correspondingly, the receiving, by an SMF, a PDU session request message sent by the relay LTE to establish a QoS flow on a Uu interface that supports non-IP type data transmission includes:
carrying, by the relay LTE, a PDU session identifier and relay indication information in the PDU session request message, the relay indication information being used for indicating to the SMF that the PDU session is established by the relay UE for relaying data of a remote LTE; or,
carrying, by the relay LTE, the PDU session identifier and QoS information in the PDU session request message, the QoS information being used for indicating to the SMF that a new QoS flow is to be established.

2) For the PDU session ID and QFI when the QoS flow of the Uu interface that is established by the relay LTE cannot serve the remote LTE, the following can be implemented:
receiving, by an SMF, a PDU session identifier and an indication that a new QoS flow is to be established sent by the relay LTE in a PDU session modification procedure;
returning, by the SMF, a QoS flow identifier to the relay UE.

Optionally, the method further includes:
allocating, by the SMF, an IPv6 prefix and a user datagram protocol (UDP) port for the QoS flow;
sending, by the SMF, an association between the QoS flow identifier and the associated IPv6 prefix and UDP port to a UPF.

In a specific implementation, the SMF returns the QoS flow identifier to the relay UE through a session modification response message.

Optionally, the SMF returns the QoS flow identifier (QFI) to the relay UE through a session modification response message.

For the relay LTE, the PDU session ID and QFI are the PDU session ID and QFI when the QoS flow on the Uu interface that is established by the relay UE can serve the remote LTE; or,
the PDU session ID and QFI are the PDU session ID and QFI obtained by the relay UE by initiating a PDU session modification procedure.

### 2. The interaction between the relay UE and the remote UE.

Optionally, exchanging, by the relay UE and the remote UE, a relay service code and a corresponding PDU session type during a relay discovery procedure.

Optionally, the method further includes:
receiving, by the relay LTE, the relay service code and the corresponding PDU session type provided by the PCF.

Specifically, the method may include:
incorporating, by the relay UE, the relay service code and the corresponding PDU session type in a relay discovery broadcast message, or,
receiving, by the relay UE, a relay discovery request message sent by the remote UE, the relay discovery request message including the relay service code and the corresponding PDU session type.

Optionally, the method may also include:
receiving, by the relay UE, a connection establishment request message sent by the remote UE, the connection establishment request message including a PC5 link identifier and a PC5 flow identifier on a PC5 interface.

### 3. Relay UE data forwarding.

In a specific implementation, the performing, by the relay UE, data forwarding according to the flow identifier includes:
determining, by the relay UE, a mapping of the PC5 link identifier and the PC5 flow identifier to the PDU session identifier and the QoS flow identifier;
performing, by the relay UE, data forwarding according to the mapping.

Specifically, the performing, by the relay UE, the data forwarding according to the mapping includes:
for uplink data, sending, by the relay LTE, data received from a QoS flow of the PC5 interface to a corresponding QoS flow of the Uu interface according to the mapping; and/or,
for downlink data, sending, by the relay LTE, data received from a QoS flow of the Uu interface to a corresponding QoS flow of the PC5 interface according to the mapping.

Optionally, when the non-IP type data is unstructured type data, the PLI and the PFI correspond to the PDU session ID and the QFI in a one-to-one manner.

4. For UPF, after receiving the association, UPF performing data forwarding according to the association includes:
for uplink data, UPF performs IPv6/UDP encapsulation of the data received from QoS flow and send it to the data network; and/or,
for downlink data, UPF decapsulates the data received from the N6 interface and send it to the corresponding QoS flow.

Optionally, the non-IP type data is unstructured type data or Ethernet type data.

The implementations of these two types of data are described below with reference to examples.

### Embodiment 1:

In this example, the transmission process of unstructured type data will be explained.

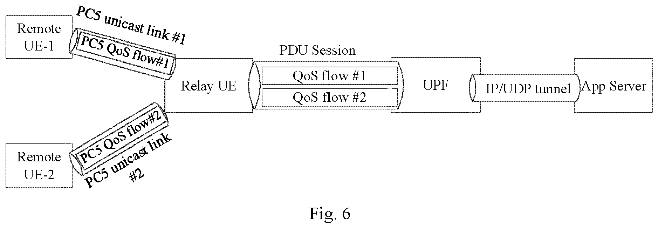

Fig. 6 is a schematic diagram of an unstructured type data transmission path in a relay scenario. As shown in Fig. 6, since there is no UE identity (such as UE IP address) in the unstructured type data packet, the UE cannot be addressed by the UE identity. In this example, a solution of establishing a Uu QoS flow for each remote UE will be used to implement unstructured type data transmission. Each PC5 link QoS flow on the PC5 interface corresponds to one Uu QoS flow.

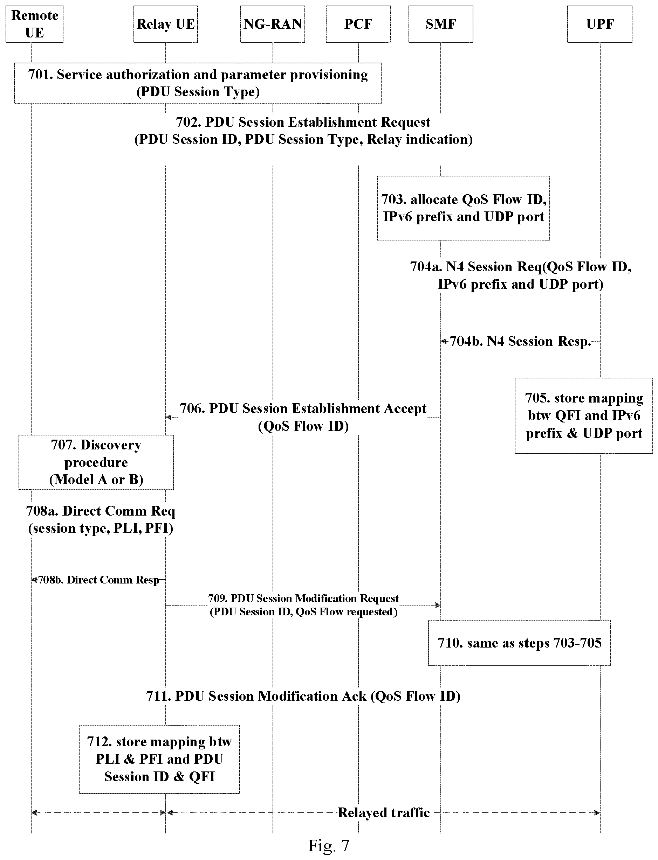

Fig. 7 is the schematic diagram of unstructured type data transmission process in Embodiment 1. The Uu QoS flow and PC5 QoS flow establishment and association processes for realizing unstructured type data transmission are as shown in the figure, and mainly include the following steps 701 to 712.

Step 701, Service authorization and parameter provisioning (PDU session type).

Specifically, the Policy Control Function (PCF) provides the remote UE and the relay UE with parameters for ProSe discovery and communication, for example, the relay service code and the PDU session type corresponding to the code being unstructured.

Step 702, PDU Session Establishment Request (PDU session ID, PDU session type, relay indication).

Specifically, the relay UE establishes a relay PDU session over the Uu interface, and the PDU session is used for relaying the data of the remote UE. The relay UE indicates the PDU session ID, PDU session type, relay indication, etc. to the SMF in the PDU session establishment message. The relay indication is used for indicating that the PDU session is used for relaying the data of the remote UE.

Step 703, allocate QoS flow ID, IPv6 prefix and UDP port.

Specifically, the SMF allocates a QoS flow ID (QFI), and an IPv6 prefix and a UDP port used for data transmission on the N6 interface (the interface between the UPF and the data network).

Step 704a, N4 Session Request (QoS flow ID, IPv6 prefix and UDP port).

Step 704b, N4 Session Resp (N4 session response).

Specifically, the SMF provides the UPF with QFI, IPv6 prefix and UDP port.

Step 705, store mapping btw QFI and IPv6 prefix & UDP port.

Specifically, UPF stores the mapping relationship between QFI and (IPv6 prefix, UDP port). For uplink data, UPF performs IPv6/UDP encapsulation of the data received from QoS flow and sends it to the data network; for downlink data, UPF decapsulates the data received from the N6 interface and sends it to the corresponding QoS flow.

Step 706, PDU Session Establishment Accept (QoS flow ID).

Specifically, the SMF returns a session accept message including the QFI to the relay UE.

Step 707, Discovery procedure (Model A or B).

Specifically, the remote UE discovers the relay UE through a discovery procedure. The discovery procedure is divided into two modes: Model A and Model B.

In the Model A mode, the relay UE incorporates the relay service code and the corresponding PDU session type in the PC5 interface discovery message, and the remote LTE selects the matching relay LTE according to the configuration information in step 701.

In the Model B mode, the remote UE incorporates the relay service code and the corresponding PDU session type in the PC5 interface discovery request message. If the relay UE supports the code and the type, the relay UE returns a PC5 interface discovery response message to the remote UE.

Step 708a, Direct Comm Req (direct communication request)(session type, PLI, PFI).

Step 708b, Direct Comm Resp (direct communication response)

Specifically, a PC5 unicast link and a PC5 interface QoS flow are established between the remote UE and the relay UE. The remote UE provides the relay UE with PDU session type, PLI (PC5 Link Identifier), and PFI (PC5 QoS flow ID).

Step 709, PDU Session Modification Request (PDU session ID, QoS flow requested).

Specifically, if the QoS flow of the Uu interface that is established by the relay UE can serve the remote UE, step 712 is directly executed.

If the QoS flow of the Uu interface that is established by the relay UE has been used by other remote UEs, the relay LTE needs to establish a new QoS flow to ensure that each QoS flow corresponds to one unique remote UE. The relay UE initiates a PDU session modification process, and the relay LTE indicates the PDU session ID to the SMF and establishes a new QoS flow.

Step 710, same as steps 703-705.

Step 711, PDU Session Modification Ack (QoS flow ID).

Specifically, the SMF returns a PDU session modification response message including the QFI corresponding to the newly established QoS flow to the relay UE.

Step 712, store mapping btw PLI & PFI and PDU session ID & QFI relayed traffic.

Specifically, the relay UE stores the mapping between (PLI, PFI) and (PDU session ID, QFI).

For uplink data, the relay LTE sends the data received from PC5 QoS flow to the corresponding Uu QoS flow;
for downlink data, the relay LTE sends the data received from the Uu QoS flow to the corresponding PC5 QoS flow.

### Embodiment 2:

In this example, the Ethernet type data transmission process will be explained.

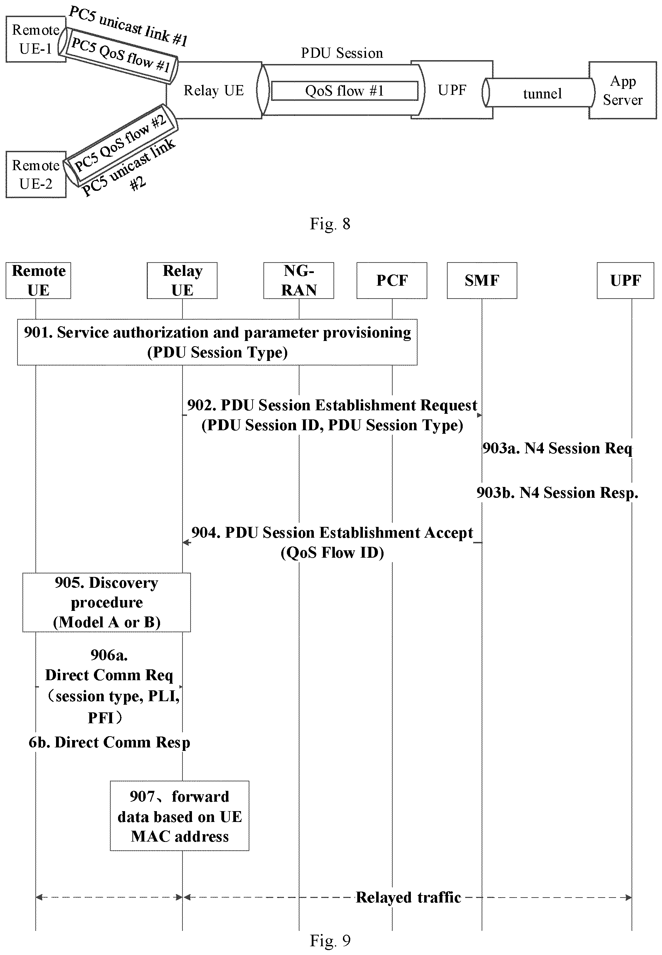

Fig. 8 is a schematic diagram of an Ethernet type data transmission path in a relay scenario. Since there is UE MAC address in the Ethernet type packet header, it can be used to address the UE. Multiple PC5 QoS flows can be mapped to one Uu QoS flow.

Fig. 9 is the schematic diagram of the Ethernet type data transmission process in the Embodiment 2. The establishment and association processes of Uu QoS flow and PC5 QoS flow for realizing the Ethernet type data transmission are as shown in the figure, and mainly include the following steps 901 to 907.

Step 901, Service authorization and parameter provisioning (PDU session type).

Specifically, the PCF provides the remote UE and the relay UE with parameters for ProSe discovery and communication, for example, the relay service code and the PDU session type corresponding to the Code being Ethernet.

Step 902, PDU Session Establishment Request (PDU session ID, PDU session type).

Specifically, the relay UE establishes a relay PDU session over the Uu interface, and the PDU session is used for relaying the data of the remote UE. The relay LTE indicates the PDU session ID and PDU session type to the SMF in the PDU session establishment message.

Step 903a, N4 Session Req.

Step 903b, N4 Session Resp.

Specifically, an N4 interface session is established between the SMF and the UPF.

Step 904, PDU Session Establishment Accept (QoS flow ID).

Specifically, the SMF returns a session accept message including the QFI to the relay UE.

Step 905, Discovery procedure (Model A or B).

Specifically, the remote UE discovers the relay UE through the discovery procedure. The discovery procedure is divided into two modes: Model A and Model B.

In the Model A mode, the relay UE incorporates the relay service code and the corresponding PDU session type in the PC5 interface discovery message, and the remote LTE selects the matching relay LTE according to the configuration information in step 901.

In Model B mode, the remote UE incorporates the relay service code and the corresponding PDU session type in the PC5 interface discovery request message. If the relay UE supports the code and the type, the relay UE returns a PC5 interface discovery response message to the remote UE.

Step 906a, Direct Comm Req (session type, PLI, PFI).

Step 906b, Direct Comm Resp.

Specifically, a PC5 unicast link and a PC5 interface QoS flow are established between the remote UE and the relay UE. The remote UE provides PDU session type, PLI (PC5 Link Identifier), and PFI (PC5 QoS flow ID) to the relay UE.

Step 907, forward data based on UE MAC address.

Specifically, the relay UE performs data forwarding based on the remote UE MAC address.

For uplink data, the relay UE sends the data received from PC5 QoS flow to the corresponding Uu QoS flow;
for downlink data, the relay UE sends the data received from the Uu QoS flow to the PC5 QoS flow on the PC5 link corresponding to the remote UE MAC address.

Based on the same inventive concept, an embodiment of the present disclosure also provides a device. Since the principles and methods for solving problems of these devices are similar, for the implementation of these devices, reference may be made to the implementation of the method, which is not repeated here.

When implementing the technical solutions provided by the embodiments of the present disclosure, it can be implemented as follows.

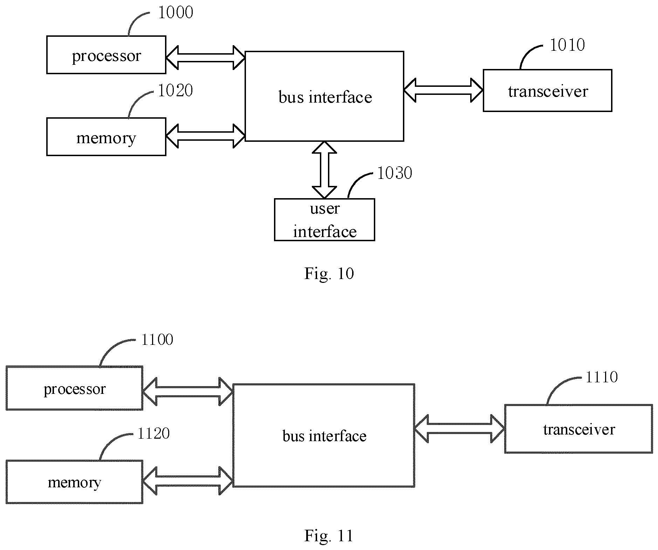

Fig. 10 is a schematic structural diagram of a relay UE. As shown in the figure, the relay user equipment includes:
a processor 1000, configured to read a program in a memory 1020 to implement the following process:
sending a PDU session request message to an SMF to establish a QoS flow on a Uu interface that supports non-IP type data transmission;
receiving a PDU session response message sent by the SMF, the response message including a flow identifier of the QoS flow;
performing data forwarding according to the flow identifier;
a transceiver 1010, configured to receive and transmit data under the control of the processor 1000.

Optionally, the non-IP type data is unstructured type data or Ethernet type data.

Optionally, the sending the PDU session request message to the session management function to establish the QoS flow on a Uu interface that supports non-IP type data transmission includes:
carrying a PDU session identifier and relay indication information in the PDU session request message, the relay indication information being used for indicating to the SMF that the PDU session is established by the relay UE for relaying data of a remote UE; or,
carrying the PDU session identifier and QoS information in the PDU session request message, the QoS information being used for indicating to the SMF that a new QoS flow is to be established.

Optionally, the UE further includes:
exchanging, with the remote UE, a relay service code and a corresponding PDU session type during a relay discovery procedure.

Optionally, the UE includes:
incorporating the relay service code and the corresponding PDU session type in a relay discovery broadcast message, or,
receiving a relay discovery request message sent by the remote UE, the relay discovery request message including the relay service code and the corresponding PDU session type.

Optionally, the UE further includes:
receiving a connection establishment request message sent by the remote UE, the connection establishment request message including a PC5 link identifier and a PC5 flow identifier on a PC5 interface.

Optionally, the performing data forwarding according to the flow identifier includes:
determining a mapping of the PC5 link identifier and the PC5 flow identifier to the PDU session identifier and the QoS flow identifier;
performing data forwarding according to the mapping.

Optionally, when the non-IP type data is unstructured type data, the PC5 link identifier and the PC5 flow identifier correspond to the PDU session identifier and the QoS flow identifier in a one-to-one manner.

Optionally, the performing the data forwarding according to the mapping includes:
for uplink data, sending data received from a QoS flow of the PC5 interface to a corresponding QoS flow of the Uu interface according to the mapping; and/or,
for downlink data, sending data received from a QoS flow of the Uu interface to a corresponding QoS flow of the PC5 interface according to the mapping.

Optionally, the UE further includes:
receiving a relay service code and a corresponding PDU session type provided by a PCF.

In Fig. 10, the bus architecture may include any number of interconnected buses and bridges, specifically various circuits such as one or more processors represented by the processor 1000 and the memory represented by the memory 1020 are connected together. The bus architecture can also connect various other circuits such as peripheral devices, voltage regulators, power management circuits, etc., which are all known in the field, and therefore, will not be further described herein. The bus interface provides the interface. The transceiver 1010 may be a plurality of elements, that is, including a transmitter and a receiver, and provide a unit for communicating with various other devices on the transmission medium. For different use equipment, a user interface 1030 may also be an interface capable of connecting externally or internally to required equipment. The connected equipment includes, but is not limited to, a keypad, a display, a speaker, a microphone, a joystick, etc.

The processor 1000 is responsible for managing the bus architecture and general processing, and the memory 1020 can store data used by the processor 1000 when performing operations.

An embodiment of the present disclosure provides a non-IP type data transmission processing apparatus, including:
a relay UE sending module, configured to send a PDU session request message to the session management function (SMF) to establish a QoS flow on a Uu interface that supports non-IP type data transmission;
a relay UE receiving module, configured to receive a PDU session response message sent by the SMF, the response message including a flow identifier of the QoS flow;
a relay LTE forwarding module, configured to perform data forwarding according to the flow identifier.

For the specific implementation, reference may be made to the implementation of the non-IP type data transmission processing method on the relay UE side.

For the convenience of description, each part of the apparatus described above is divided into various modules or units by function and described respectively. Of course, when implementing the present disclosure, the functions of each module or unit may be implemented in one or more software or hardware.

Fig. 11 is a schematic structural diagram of an SMF, including:
a processor 1100, configured to read a program in a memory 1120 to implement the following process:
receiving a PDU session request message sent by the relay LTE to establish a QoS flow on a Uu interface that supports non-IP type data transmission;
returning a QoS flow identifier to a relay UE;
a transceiver 1110, configured to receive and transmit data under the control of the processor 1100.

Optionally, the receiving a PDU session request message sent by the relay UE to establish a QoS flow on a Uu interface that supports non-IP type data transmission includes:
carrying, by the relay LTE, a PDU session identifier and relay indication information in the PDU session request message, the relay indication information being used for indicating to the SMF that the PDU session is established by the relay UE for relaying data of a remote LTE; or,
carrying, by the relay LTE, the PDU session identifier and QoS information in the PDU session request message, the QoS information being used for indicating to the SMF that a new QoS flow is to be established.

Optionally, the SMF further includes:
allocating, by the SMF, an IPv6 prefix and a user datagram protocol (UDP) port for the QoS flow;
sending, by the SMF, an association between the QoS flow identifier and the associated IPv6 prefix and UDP port to a UPF.

Optionally, the SMF further includes:
receiving a PDU session identifier and an indication that a new QoS flow is to be established sent by the relay UE in a PDU session modification procedure;
returning a QoS flow identifier to the relay UE.

In Fig. 11, the bus architecture may include any number of interconnected buses and bridges, specifically various circuits such as one or more processors represented by the processor 1100 and the memory represented by the memory 1120 are connected together. The bus architecture can also connect various other circuits such as peripheral devices, voltage regulators, power management circuits, etc., which are all known in the field, and therefore, will not be further described herein. The bus interface provides the interface. The transceiver 1110 may be a plurality of elements, that is, including a transmitter and a receiver, and provide a unit for communicating with various other devices on the transmission medium. The processor 1100 is responsible for managing the bus architecture and general processing, and the memory 1120 can store data used by the processor 1100 when performing operations.

An embodiment of the present disclosure provides a non-IP type data transmission processing apparatus, including:
an SMF receiving module, configured to receive a PDU session request message sent by the relay LTE to establish a QoS flow on a Uu interface that supports non-IP type data transmission;
an SMF sending module, configured to return a QoS flow identifier to a relay UE.

For the specific implementation, reference may be made to the implementation of the non-IP type data transmission processing method on the SMF side.

For the convenience of description, each part of the device described above is divided into various modules or units by function and described respectively. Of course, when implementing the present disclosure, the functions of each module or unit may be implemented in one or more software or hardware.

An embodiment of the present disclosure provides a computer-readable storage medium, where the computer-readable storage medium stores a computer program configured to execute the non-IP type data transmission processing method mentioned above.

For the specific implementation, reference may be made to the implementation of the non-IP type data transmission processing method on the relay UE side and/or the SMF side.

In summary, in the technical solutions provided by the embodiments of the present disclosure, the relay UE establishes a Uu QoS flow to support unstructured data transmission, the relay UE indicates to the SMF that a QoS flow needs to be established for the unstructured PDU session, and the SMF allocates the QFI and the associated IPv6 prefix and UDP port, and send them to UPF for data forwarding according to the association.

The relay UE and the remote UE exchange PDU session type and link and flow identification information in the PC5 discovery and communication establishment process.

The relay UE forwards data according to the mapping between PFI and QFI, and the UE MAC address.

This solution solves the problem that how a remote UE can support the transmission of Ethernet and Unstructured type (i.e., non-IP type) data through a relay UE.

A person skilled in the art can understand that embodiments of the present disclosure may be provided as a method, system, or computer program product. Accordingly, the present disclosure may take the form of an entirely hardware embodiment, an entirely software embodiment, or an embodiment combining software and hardware aspects. Furthermore, the present disclosure may take the form of a computer program product configured to be executed on one or more computer-usable storage mediums storing computer-usable program code therein (including but not limited to disk storage, optical storage, etc.).

The present disclosure is described with reference to flowcharts and/or block diagrams of methods, apparatus (systems), and computer program products according to the embodiments of the disclosure. It will be understood that each process and/or block in the flowcharts and/or block diagrams, and combinations of processes and/or blocks in the flowcharts and/or block diagrams, can be implemented by computer program instructions. These computer program instructions may be provided to the processor of a general-purpose computer, special purpose computer, embedded processor or other programmable data processing device to produce a machine such that the instructions executed by the processor of the computer or other programmable data processing device produce an apparatus for implementing the functions specified in one or more processes in the flowcharts and/or one or more blocks in the block diagrams.

These computer program instructions may also be stored in a computer readable memory capable of directing a computer or other programmable data processing device to operate in a particular manner, such that the instructions stored in the computer readable memory produce an article of manufacture including an instruction device that implements the functions specified in one or more processes in a flowchart and/or one or more blocks in a block diagram.

These computer program instructions may also be loaded onto a computer or other programmable data processing device such that a series of operational steps are executed on the computer or other programmable device to produce computer-implemented processing, so that the instructions executed on the computer or other programmable device provide steps for implementing the functions specified in in one or more processes in a flowchart and/or one or more blocks in a block diagram.

It can be understood that the embodiments described in the present disclosure may be implemented by hardware, software, firmware, middleware, microcode, or a combination of them. For hardware implementation, module, unit, and subunit can be implemented in one or more application-specific integrated circuits (ASIC), digital signal processor (DSP), digital signal processing device (DSP Device, DSPD), programmable logic device (PLD), Field-Programmable Gate Array (FPGA), general-purpose processors, controllers, microcontrollers, microprocessors, and others for performing the functions described in this disclosure electronic unit or the combination thereof.

The use of "and/or" in the description and claims of the present disclosure denotes at least one of the connected objects. For example, "A and/or B" indicates the three cases: A alone, B alone, and both A and B.

It is apparent that for a person skilled in the art, several modifications and variations can be made in the present disclosure without departing from the spirit and scope of the present disclosure. Thus, provided that these modifications and variations of the present disclosure fall within the scope of the claims of the present disclosure and their equivalents, the present disclosure is also intended to cover such modifications and variations.

## Claims

1. A non-Internet protocol (non-IP) type data transmission processing method, comprising:
sending, by a relay user equipment (UE), a protocol data unit (PDU) session request message to a session management function (SMF) to establish a quality of service (QoS) flow on a Uu interface that supports non-IP type data transmission;
receiving, by the relay UE, a PDU session response message sent by the SMF, the response message comprising a flow identifier of the QoS flow;
performing, by the relay UE, data forwarding according to the flow identifier.

2. The non-IP type data transmission processing method according to claim 1, wherein the non-IP type data is unstructured type data or Ethernet type data.

3. The non-IP type data transmission processing method according to claim 1, wherein, the sending, by the relay UE, the PDU session request message to the session management function to establish the QoS flow on the Uu interface that supports non-IP type data transmission comprises:
carrying, by the relay LTE, a PDU session identifier and relay indication information in the PDU session request message, the relay indication information being used for indicating to the SMF that the PDU session is established by the relay UE for relaying data of a remote UE; or,
carrying, by the relay UE, the PDU session identifier and QoS information in the PDU session request message, the QoS information being used for indicating to the SMF that a new QoS flow is to be established.

4. The non-IP type data transmission processing method according to any one of claims 1 to 3, further comprising:
exchanging, by the relay UE and the remote UE, a relay service code and a corresponding PDU session type during a relay discovery procedure.

5. The non-IP type data transmission processing method according to claim 4, comprising:
incorporating, by the relay LTE, the relay service code and the corresponding PDU session type in a relay discovery broadcast message, or,
receiving, by the relay UE, a relay discovery request message sent by the remote UE, the relay discovery request message comprising the relay service code and the corresponding PDU session type.

6. The non-IP type data transmission processing method according to claim 1, further comprising:
receiving, by the relay UE, a connection establishment request message sent by the remote UE, the connection establishment request message comprising a PC5 link identifier and a PC5 flow identifier on a PC5 interface.

7. The non-IP type data transmission processing method according to claim 1 or 6, wherein, the performing, by the relay UE, data forwarding according to the flow identifier comprises:
determining, by the relay LTE, a mapping of a PC5 link identifier and a PC5 flow identifier to a PDU session identifier and a QoS flow identifier;
performing, by the relay UE, data forwarding according to the mapping.

8. The non-IP type data transmission processing method according to claim 7, wherein when the non-IP type data is unstructured type data, the PC5 link identifier and the PC5 flow identifier correspond to the PDU session identifier and the QoS flow identifier in a one-to-one manner.

9. The non-IP type data transmission processing method according to claim 7, wherein, the performing, by the relay UE, the data forwarding according to the mapping comprises:
for uplink data, sending, by the relay UE, data received from a QoS flow of the PC5 interface to a corresponding QoS flow of the Uu interface according to the mapping; and/or,
for downlink data, sending, by the relay UE, data received from a QoS flow of the Uu interface to a corresponding QoS flow of the PC5 interface according to the mapping.

10. The non-IP type data transmission processing method according to claim 1, further comprising:
receiving, by the relay UE, a relay service code and a corresponding PDU session type provided by a policy control function (PCF).

11. A non-IP type data transmission processing method, comprising:
receiving, by an SMF, a PDU session request message sent by a relay UE to establish a QoS flow on a Uu interface that supports non-IP type data transmission;
returning, by the SMF, a QoS flow identifier to the relay UE.

12. The non-IP type data transmission processing method according to claim 11, wherein, the receiving, by the SMF, the PDU session request message sent by the relay LTE to establish the QoS flow on the Uu interface that supports non-IP type data transmission comprises:
carrying, by the relay UE, a PDU session identifier and relay indication information in the PDU session request message, the relay indication information being used for indicating to the SMF that the PDU session is established by the relay UE for relaying data of a remote UE; or,
carrying, by the relay UE, the PDU session identifier and QoS information in the PDU session request message, the QoS information being used for indicating to the SMF that a new QoS flow is to be established.

13. The non-IP type data transmission processing method according to claim 11, further comprising:
allocating, by the SMF, an IPv6 prefix and a user datagram protocol (UDP) port for the QoS flow;
sending, by the SMF, an association between the QoS flow identifier and the associated IPv6 prefix and UDP port to a UPF.

14. A relay UE, comprising a processor, a transceiver and a memory storing therein a program,
wherein, the processor is configured to read the program in the memory to implement the following process:
sending a PDU session request message to an SMF to establish a QoS flow on a Uu interface that supports non-IP type data transmission;
receiving a PDU session response message sent by the SMF, the response message comprising a flow identifier of the QoS flow;
performing data forwarding according to the flow identifier; and
the transceiver is configured to receive and transmit data under the control of the processor.

15. The relay UE according to claim 14, wherein the non-IP type data is unstructured type data or Ethernet type data.

16. The relay UE according to claim 14, wherein, the sending the PDU session request message to the session management function to establish the QoS flow on the Uu interface that supports non-IP type data transmission comprises:
carrying a PDU session identifier and relay indication information in the PDU session request message, the relay indication information being used for indicating to the SMF that the PDU session is established by the relay LTE for relaying data of a remote LTE; or,
carrying the PDU session identifier and QoS information in the PDU session request message, the QoS information being used for indicating to the SMF that a new QoS flow is to be established.

17. The relay LTE according to any one of claims 14 to 16, wherein the processor is configured to read the program to further implement:
exchanging, with a remote UE, a relay service code and a corresponding PDU session type during a relay discovery procedure.

18. The relay UE according to claim 17, wherein the processor is configured to read the program to implement:
incorporating the relay service code and the corresponding PDU session type in a relay discovery broadcast message, or,
receiving a relay discovery request message sent by the remote UE, the relay discovery request message comprising the relay service code and the corresponding PDU session type.

19. The relay UE according to claim 14, wherein the processor is configured to read the program to further implement:
receiving a connection establishment request message sent by the remote UE, the connection establishment request message comprising a PC5 link identifier and a PC5 flow identifier on a PC5 interface.

20. The relay LTE according to claim 14 or 19, wherein, the performing data forwarding according to the flow identifier comprises:
determining a mapping of a PC5 link identifier and a PC5 flow identifier to a PDU session identifier and a QoS flow identifier;
performing data forwarding according to the mapping.

21. The relay UE according to claim 20, wherein, when the non-IP type data is unstructured type data, the PC5 link identifier and the PC5 flow identifier correspond to the PDU session identifier and the QoS flow identifier in a one-to-one manner.

22. The relay LTE according to claim 20, wherein, the performing the data forwarding according to the mapping comprises:
for uplink data, sending data received from a QoS flow of the PC5 interface to a corresponding QoS flow of the Uu interface according to the mapping; and/or,
for downlink data, sending data received from a QoS flow of the Uu interface to a corresponding QoS flow of the PC5 interface according to the mapping.

23. The relay UE according to claim 14, wherein the processor is configured to read the program to further implement:
receiving a relay service code and a corresponding PDU session type provided by a PCF.

24. An SMF, comprising a processor, a transceiver and a memory storing therein a program,
wherein the processor is configured to read the program in the memory to implement the following process:
receiving a PDU session request message sent by a relay LTE to establish a QoS flow on a Uu interface that supports non-IP type data transmission;
returning a QoS flow identifier to the relay UE; and
the transceiver is configured to receive and transmit data under the control of the processor.

25. The SMF according to claim 24, wherein, the receiving the PDU session request message sent by the relay LTE to establish the QoS flow on the Uu interface that supports non-IP type data transmission comprises:
carrying, by the relay UE, a PDU session identifier and relay indication information in the PDU session request message, the relay indication information being used for indicating to the SMF that the PDU session is established by the relay UE for relaying data of a remote UE; or,
carrying, by the relay UE, the PDU session identifier and QoS information in the PDU session request message, the QoS information being used for indicating to the SMF that a new QoS flow is to be established.

26. The SMF according to any one of claims 24 to 25, wherein the processor is configured to read the program to further implement:
allocating an IPv6 prefix and a UDP port for the QoS flow;
sending an association between the QoS flow identifier and the associated IPv6 prefix and UDP port to a UPF.

27. A non-IP type data transmission processing apparatus, comprising:
a relay UE sending module, configured to send a PDU session request message to an SMF to establish a QoS flow on a Uu interface that supports non-IP type data transmission;
a relay UE receiving module, configured to receive a PDU session response message sent by the SMF, the response message comprising a flow identifier of the QoS flow;
a relay UE forwarding module, configured to perform data forwarding according to the flow identifier.

28. A non-IP type data transmission processing apparatus, comprising:
an SMF receiving module, configured to receive a PDU session request message sent by the relay UE to establish a QoS flow on a Uu interface that supports non-IP type data transmission;
an SMF sending module, configured to return a QoS flow identifier to a relay UE.

29. A computer-readable storage medium storing a computer program, wherein the computer program is configured to be executed by a computer, to implement the method according to any one of claims 1 to 13.
